# EUROPEAN PATENT APPLICATION

(11) **EP 0 942 231 A1**
(43) Date of publication of application: **15.09.1999**
(21) Application number: 98941731.6
(22) Date of filing: 04.09.1998
(51) Int. Cl.: F23G 7/06, B01D 53/34

(54) **DEODORIZING APPARATUS AND DEODORIZING METHOD**

(30) Priority: 08.09.1997 JP 24233297
(71) Applicant: Tanaka Kikinzoku Kogyo K.K., Tokyo 103-0025 (JP)
(72) Inventor: SHOJI, Tohru, Hiratsuka-shi, Kanagawa-ken 254-0076 (JP)
(74) Representative: Allard, Susan Joyce
(86) International application number: JP9803987
(87) International publication number: WO9913270

(57) **Abstract**

An object of the present invention is to provide a deodorizing apparatus and a deodorizing method utilizing a electrically heatable combustion catalyst that is formed through a process of rolling catalyst foil having an insulating surface layer. Since the deodorizing apparatus according to the present invention uses a electrically heatable combustion catalyst formed of rolled catalyst foil having an insulating surface layer, the deodorizing apparatus can generate a large amount of heat to thereby enable deodorizing treatment of a large volume of odorous gas. Further, use of the electrically heatable combustion catalyst enables rapid heating of the odorous gas to a catalyst activation temperature to thereby prevent incomplete combustion of the odorous gas, and a reduction in the size of the deodorizing apparatus.

## Description

### FIELD OF THE INVENTION

The present invention relates to a deodorizing apparatus and a deodorizing method utilizing a combustion catalyst that can be heated through application of electricity.

### BACKGROUND OF THE INVENTION

In a conventional deodorizing apparatus using a deodorizing catalyst, deodorization is performed such that odorous gas generated from a storage tank accommodating organic substances such as filth, poultry manure, and kitchen refuse is preheated to a catalyst activation temperature, and is then caused to undergo combustion by the catalyst, which is carried on a ceramic honeycomb.

However, the deodorizing apparatus utilizing a ceramic honeycomb has various problems. For example, when odorous gas generated from the storage tank is preheated to the catalyst activation temperature by means of a heater, the speed of elevation of the temperature of the odorous gas is low. If the temperature of the odorous gas that flows into the catalyst at the begining of deodorization combustion is not higher than the catalyst activation temperature, a combustion reaction does not occur, resulting in incomplete deodorization.

Further, during treatment of odorous gas containing small pieces of wood or dense organic substance such as tar, the ceramic honeycomb becomes clogged with tar or small pieces of wood. Therefore, the ceramic honeycomb must be cleaned regularly. Necessity for such cleaning precludes uninterrupted operation, and accumulation of tar or small pieces of wood hinders the catalytic function.

Moreover, although the ceramic honeycomb has excellent properties in terms of heat resistance, hardness, and the like, the ceramic honeycomb has poor toughness and is brittle. Therefore, the ceramic honeycomb has poor impact resistance and is easily broken. Accordingly, the ceramic honeycomb must be handled with care.

Meanwhile, a deodorizing apparatus using in combination a combustion catalyst that is heated through application of electricity and a combustion catalyst that is not heated has been widely used for deodorizers of automobiles. Since such a deodorizing apparatus for automobiles uses a battery which is a 12-Volt power supply, a strong current instantaneously flows through the deodorizing apparatus at the time of startup. Further, a space for accommodating the deodorizing apparatus is limited Under such numerous design restrictions, deodorizing apparatuses have been designed and used. However, the design concept of a deodorization catalyst used in such a deodorizing apparatus for automobiles cannot be used for the purpose of treating a large amount of odorous gas generated from a storage tank accommodating organic substances such a filth, poultry manure, and kitchen refuse.

### SUMMARY OF THE INVENTION

An object of the present invention is to provide a deodorizing apparatus and a deodorizing method utilizing a combustion catalyst that can be heated through application of electricity and that is formed through a process of rolling catalyst foil having an insulating surface layer. The deodorizing apparatus and the deodorizing method enable generation of a large amount of heat to thereby enable treatment of a large volume of odorous gas, rapid heating of the odorous gas to a catalyst activation temperature to thereby prevent incomplete combustion of the odorous gas, and a reduction in the size of the deodorizing apparatus. Another object of the present invention is to provide a metallic honeycomb combustion catalyst to thereby avoid breakage of the ceramic honeycomb catalyst during handling, which would otherwise occur in the case of a ceramic honeycomb catalyst, and to reduce pressure loss of odorous gas produced within the catalyst

### DETAILED DESCRIPTION OF THE INVENTION

The invention described in Claim 1 is directed to a deodorizing apparatus comprising a combustion catalyst formed of rolled catalyst foil having an insulating surface layer, and a tubular casing for accommodating the combustion catalyst. The combustion catalyst uses, as a heating resistor, a catalyst foil that is heated through application of electricity. Odorous gas is introduced from a primary side of the combustion catalyst and is discharged as clean air from a secondary side of the combustion catalyst after odorous components of the odorous gas undergo combustion. The most important feature of the deodorizing apparatus resides in that an insulating layer is provided as a surface layer on the catalyst foil used in the combustion catalyst.

When a insulating layer is provided as a surface layer on the catalyst foil, the insulating layer forms a layered structure within the combustion catalyst formed of the roiled catalyst foil, so that mutually contacting portions of the catalyst foil do not form a short circuit. Accordingly, in the combustion catalyst formed of the rolled catalyst foil, when a current is supplied between an electrode provided at one end of the rolled catalyst foil located at the center of the combustion catalyst and a electrode provided at the outermost end of the rolled catalyst foil, the current flows through the entire length of the rolled catalyst foil. Therefore, there can be obtained a resistance greater than that obtained in the case where no insulating layer is provided on the catalyst foil.

Although a combustion catalyst that can be heated through application of electricity and is used for an exhaust gas deodorizing apparatus for automobile utilizes rolled catalyst foil, the catalyst foil does not have a surface insulating layer. Therefore, current supplied to the catalyst foil does not flow spirally through entire length of the catalyst foil but flows in a radial direction of a circular cross section of the catalyst due to short circuits formed in the rolled catalyst foil; i.e., the current flows through the path of least resistance. If the combustion catalyst has such a property, a large amount of heat cannot be generated uniformly within the catalyst. A deodorizing apparatus according to the present invention, which is assumed to be constituted by a heat-resistant alloy material being identical to that used for an exhaust gas deodorizer for automobiles and being employed for manufacturing a catalyst foil being provided with an insulating layer will allow an electric current to flow in accordance with an entire length of the catalyst foil rolled. Therefore, in order to generate an amount of heat identical to that generated by the exhaust gas deodorizer for automobiles, only a light electric current is required when a 100-Volt power supply is used as compared with the exhaust gas deodorizer for automobiles.

In the present invention, since electricity is supplied to the catalyst foil such that the catalyst foil itself serves as a heating resistor, the combustion catalyst can be heated directly, so that odorous gas can be quickly heated to a catalyst activation temperature to enable stable deodorization combustion (hereinafter, a combustion catalyst that can be heated through application of electricity to catalyst foil is referred to as an "electrically heatable combustion catalyst"). Further, use of the electrically heatable combustion catalyst as a deodorization catalyst of the deodorizing apparatus eliminates a pre-heating step before catalyst combustion, so that the deodorization passage can be shortened. As a result, the size of the deodorizing apparatus can be decreased, and the range of applications can be broadened.

Also, during treatment of odorous gas containing small pieces of wood or dense organic substance such as tar, use of the electrically heatable combustion catalyst as a deodorization catalyst of the deodorizing apparatus enables removal, through combustion oxidation, of tar, small pieces of wood, etc., which would otherwise cause clogging. Therefore, the metallic honeycomb of the electrically heatable combustion catalyst does not become clogged, so that regular cleaning becomes unnecessary. This reduces the running cost of the deodorizing apparatus, thereby providing an enormous economic effect.

Moreover, use of a metallic honeycomb in the combustion catalyst overcomes the problem of poor impact resistance of the conventional ceramic honeycomb and prevents damage which would otherwise occur during handling, transportation, etc., thereby reducing defectives.

The ceramic material of the conventional ceramic honeycomb has a thickness of about 150 - 300 µm. By contrast, the metallic material of the metallic honeycomb of the present invention has a thickness of about 50 µm. Therefore, the metallic honeycomb of the present invention causes a smaller pressure loss of odorous gas, so that the load of an air blower can be decreased while the same linear velocity is maintained.

The deodorizing apparatus described in Claim 2 comprises a first electrically heatable combustion catalyst and a second electrically heatable combustion catalyst disposed on the secondary side of the first electrically heatable combustion catalyst. In this deodorizing apparatus, deodorization combustion of odorous gas is performed as follows. That is, odorous gas introduced into a combustion process burns at the first electrically heatable combustion catalyst, and further burns at the second electrically heatable combustion catalyst, while maintaining the catalyst activation temperature. Thus, a more complete deodorization effect is attained.

The invention of Claim 3 is directed to an additional feature of the deodorizing apparatus described in Claim 1 or 2 such that the insulating layer of the catalyst foil is crystallized glass provided between an alumina whisker layer and a catalyst layer composed of a precious metal component, which serves as a catalyst, and a washcoat. Formation of the alumina whisker layer and formation of the catalyst layer composed of a precious metal component serving as a catalyst and a washcoat is a conventional practice. The feature of Claim 3 resides in that an insulating layer formed of crystallized glass is provided between the alumina whisker layer and the catalyst layer.

The insulating layer formed of crystallized glass serves as a protection layer for protecting the catalyst foil from corrosion by odorous gas, which is generally acidic, and as an insulating layer which causes current supplied to the catalyst foil to flow in the longitudinal direction of the rolled catalytic metal while preventing formation of short circuits between adjacent portions of the catalyst foil. The insulating layer of crystallized glass is formed in accordance with the method disclosed in Japanese Patent Application Laid-Open (kokai) No. 4-198039 and is made of a material selected from the group consisting of anorthite (CaAl₂Si₂O₈), slawsonite (SrAl₂Si₂O₈), and celsian (BaAl₂Si₂O₈), or a mixture of two or more materials selected from the group.

The invention described in Claim 4 is directed to a deodorizing apparatus in which an electrically heatable combustion catalyst is accommodated within a tubular casing whose inner surface is coated with an insulating coating material via an intermediate layer composed of mica and a thermal expansion mat. The intermediate layer provides complete electrical insulation between the electrically heatable combustion catalyst and the tubular casing. The electrical insulation is mainly provided by means of mica and the insulating coating material applied to the inner surface of the tubular casing. As the temperature of the electrically heatable combustion catalyst increases, the thermally expandable mat expands in order to firmly fix the tubular casing and the first combustion catalyst together.

The invention described in Claim 5 is directed to a deodorizing apparatus in which the electrically heatable combustion catalyst has a thermocouple for measuring the internal temperature, and in which current supplied to the combustion catalyst is controlled based on the measured temperature in order to maintain a predetermined combustion temperature. The reason the deodorizing apparatus is thus structured is that since current is applied to heat the catalyst foil such that the catalyst foil itself serves as a heating resistor, to rapidly elevate the temperature to a catalyst activation temperature for burning odorous gas, if current is applied without limit to the electrically heatable combustion catalyst, the internal temperature of the combustion catalyst increases excessively, with the result that local heating occurs due to short circuits resulting from a decrease in the insulating resistance, which may cause fusion of the metallic honeycomb. Accordingly, control of the internal temperature of the catalyst is important from the viewpoint of safety.

Control of the internal temperature of the catalyst can be performed most properly in accordance with a method in which the internal temperature of the electrically heatable combustion catalyst is continuously measured through use of the thermocouple and the measured temperature is fed back to a controller, which supplies a proper amount of current to the electrically heatable combustion catalyst.

The invention described in Calm 6 is directed to a deodorizing method in which the amount of odorous gas introduced into the electrically heatable combustion catalyst is adjusted such that the odorous gas passes through the electrically heatable combustion catalyst at a linear velocity of 0.5 m/sec or greater. The deodorizing apparatus of the present invention has a structure in which a preheating chamber for heating odorous gas is not provided on the upstream side of the flow of the odorous gas, which is on the primary side of the electrically heatable combustion catalyst.

Accordingly, when a reaction in the combustion process propagates in the upstream direction; i.e., when backfiring occurs, no portion functions as a buffer, so that there exists a possibility that fire spreads to a storage tank accommodating organic substances such as filth, poultry manure, and kitchen refuse. Although this phenomenon rarely occurs under ordinary deodorization conditions, it may occur when the concentration of odorous gas is high and thus the temperature exceeds 700°C. Although various measures such as a flame arrester are provided in the facility in order to prevent backfiring, the most fundamental and most important measure is to set the flow rate of odorous gas to a rate at which backfiring never occurs.

As a result of performing various studies, the present inventors found that when the linear velocity of odorous gas passing through the first electrically heatable combustion catalyst is set to 0.5 m/sec or greater, backfiring can be completely prevented in the combustion temperature range in which the deodorizing apparatus of the present invention is used.

### EMBODIMENT OF THE INVENTION

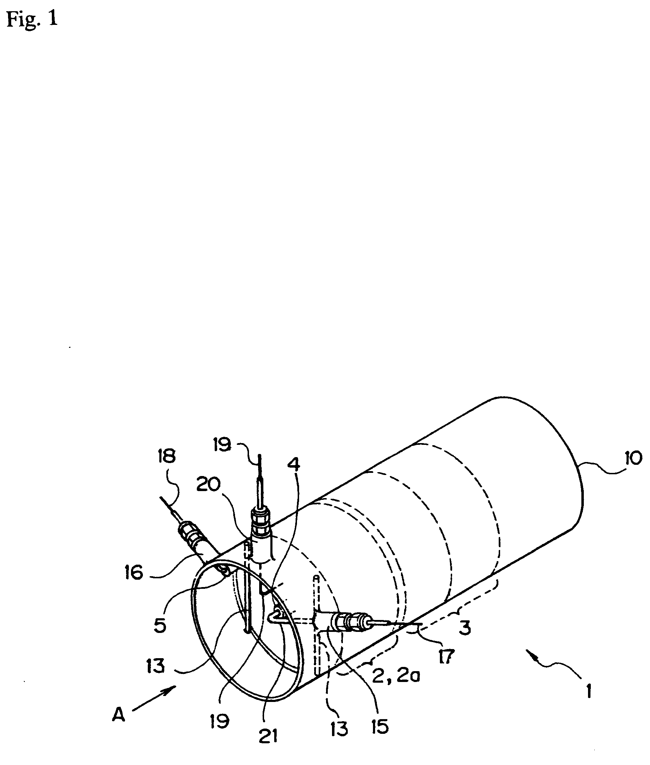

An embodiment that is considered a best mode of the present invention will now be described with reference to the drawings. As is apparent from FIGS. 1 - 4, a deodorizing apparatus 1 of the present invention is mainly composed of a electrically heatable combustion catalyst 2, a unheated combustion catalyst 3 disposed on the secondary side of the electrically heatable combustion catalyst 2, and a tubular casing 10 for accommodating these catalysts.

The electrically heatable combustion catalyst 2 is composed of a catalyst foil 2a serving as a catalyst carrier, a center rod 4, and an outer rod 5. The catalyst foil 2a is formed of a heat resistant stainless alloy containing aluminum; for example, Fe-20%Cr-5%Al-0.08La. The catalyst foil 2a preferably has a wavy shape or a wavy, herringbone shape.

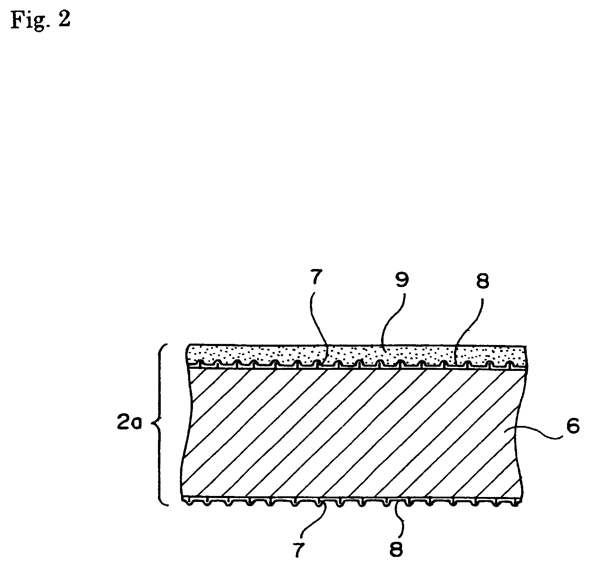

FIG. 2 shows a schematic enlarged cross section of the catalyst foil 2a showing the layered structure of the catalyst foil 2a. Catalyst is applied onto the catalyst foil 2a in the following manner. First, foil 6 of a heat resistant stainless alloy containing aluminum; for example, Fe-20%Cr-5%Al-0.08La, is heat-treated at 900°C for 15 hours in order to form whiskers 7 of aluminum oxide on the surface of the foil. The whiskers 7 serve as anchors for increasing strength of close contact with a washcoat and the like. In the step described below, an insulating layer of crystallized glass must be applied onto both surfaces of the catalyst foil 2a, because the insulating layer serves as a protective layer for preventing corrosion. Meanwhile, catalyst may be applied onto only one surface or on both surfaces of the catalyst foil 2a, depending on a target combustion performance and the design details such as whether the catalyst is formed through a process of rolling a wavy foil in combination with a spacer or through a process of rolling a herringbone foil alone.

Subsequently, an insulating layer 8 of crystallized glass is formed on the surface of the heat resistant alloy foil 6 on which whiskers 7 of aluminum oxide have been formed A protective crystallized-glass layer of anorthite (CaAl₂Si₂O₈) is formed in accordance with the following manner. Fifty five wt.% of glass powder containing SiO₂ (54.9 wt.%), B₂O₃ (5.0 wt.%), CaO (7.4 wt.%), MgO (2.5 wt.%), PbO (17.6 wt.%), Al₂O₃ (8.4 wt.%), Na₂O (2.6 wt.%), and K₂O (1.6 wt.%) and having a coefficient of thermal expansion of 72 x 10⁻⁷/°C (25 - 300°C) is mixed with 22.5 wt.% of Al₂O₃ and 22.5 wt.% of CaZrO₃. The mixture is then dispersed into an α-terpineol solution of ethyl cellulose, and kneaded to obtain an intermediate insulating paste. Crystalline glass powder containing SiO₂ (35.6 wt.%), B₂O₃ (3.1 wt.%), CaO (16.9 wt.%), ZnO (19.2 wt.%), Al₂O₃, (11.3 wt.%), and TiO₂ (13.9 wt.%), and which precipitates anorthite crystals during firing, is mixed into the intermediate insulating paste in an amount of 30% with respect to the total amount of inorganic solid content, to thereby obtain a final insulating paste. This insulating past is applied to the surface of the heat-resistant alloy foil 6 on which whiskers 7 of aluminum oxide have been formed, and is then fired at 850°C for 10 minutes in order to induce precipitation of anorthite crystals. Thus, formation of the insulating layer 8 of crystallized glass is completed.

After formation of the whiskers 7 of aluminum oxide and formation of the insulating layer 8 of crystallized glass, washcoat and a precious metal component serving as a catalyst is applied. As the precious metal component, there can be used precious metals, such as platinum and platinum-palladium, that can be used as combustion catalyst. The precious metal component is applied in accordance with a method in which a washcoat is first applied and then a solution of a complex containing a precious metal component is spray-coated, a method in which solution of a complex containing a precious metal component is first spray-coated and then a washcoat is applied, or a method in which a mixture of a washcoat and solution of a complex containing a precious metal component is spray-coated. The thus-applied coat of the precious metal component is dried at about 80 - 90°C and heat-treated at 800°C for 10 hours to form a catalytic layer 9. Thus, preparation of the catalyst foil 2a is completed. The washcoat used here preferably has a composition of Al₂O₃-10%CeO₂.

With reference mainly to FIGS. 1, 2, and 3, a description will be given of the process of assembling the deodorizing apparatus 1 through use of the above-described catalyst foil 2a. First, the center rod 4 is formed through cutting a rod of heat resistant stainless alloy, which is the same material as that of the catalyst foil 2a. One end of the catalyst foil 2a is joined to the center rod 4 by means of welding, hard soldering, or spot welding. The catalyst foil 2a is then rolled around the center rod 4, and the outer rod 5 is joined to the other end or outermost end of the catalyst foil 2a by means of welding, hard soldering, or spot welding. Thus, the combustion catalyst 2 assumes its fundamental shape. In order to apply current to the combustion catalyst 2, electrodes must be provided on the combustion catalyst 2, as will be described later.

Except the connection of the outer rod 5, the combustion catalyst 3 is formed of the same material and in accordance with the same manner as employed for the combustion catalyst 2. Therefore, the method of manufacturing the combustion catalyst 3 will be omitted in order to avoid redundancy.

Since the tubular casing 7 accommodates the electrically heatable combustion catalyst 2 and the unheated combustion catalyst 3 disposed on the secondary side of the combustion catalyst 2, the tubular casing 7 must have heat resistance. Accordingly, the tubular casing 7 is preferably formed of a heat resistant stainless alloy. However, since formation of whiskers of aluminum oxide on the tubular casing 7 is not required, the tubular casing 7 does not have to be formed from a stainless material containing aluminum.

Subsequently, the combustion catalysts 2 and 3 are assembled into tubular casing 10. An insulating coat material 11 is applied on the inner surface of a portion of the tubular casing 10 where the electrically heatable combustion catalyst 2 is disposed. An alumina coat material (inorganic oxide coating) is applied as the insulating coat material 11, and is then dried to complete the application of the insulating coat material 11. Subsequently, the electrically heatable combustion catalyst 2 is incorporated in the tubular casing 10 whose inner surface has been coated with the insulating coat material 11. An intermediate layer 12 is interposed between the electrically heatable combustion catalyst 2 and the inner surface of the tubular casing 10 coated with the insulating coat material 11. The intermediate layer 12 preferably has a layered structure comprising mica, thermal expansion mat, and mica, in this sequence.

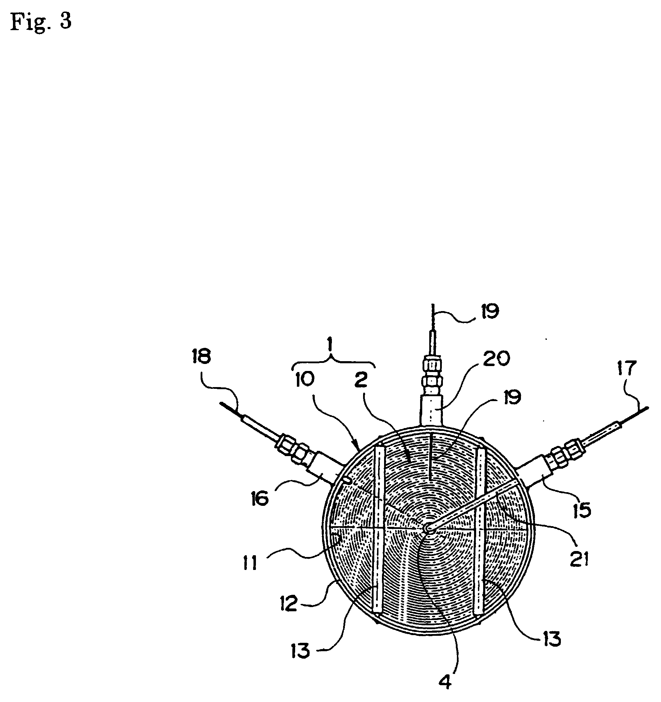

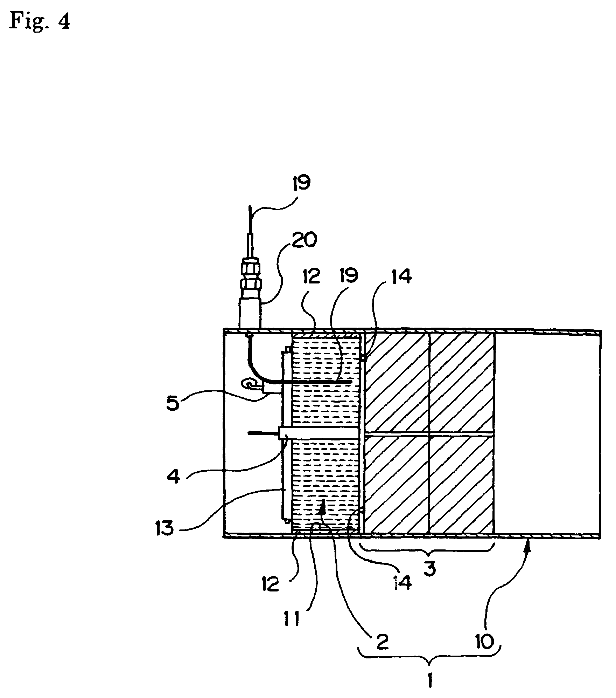

After assembly of the combustion catalyst 2 into the tubular casing 10, the intermediate layer 12 prevents positional shift during vibration resulting from operation of the deodorizing catalyst, and provides complete insulation between the combustion catalyst 2 and the tubular casing 10. Further, the deodorizing apparatus employs various other design concepts. For example, as shown in FIGS. 3 and 4, a stopper 13 formed of two ceramic pipes is disposed on the primary side of the combustion catalyst 2 into which odorous gas flows, in order to fix the combustion catalyst 2 and to secure insulation. Further, as shown in FIG. 4, an insulating bar 14 formed of ceramic is disposed between the combustion catalysts 2 and 3 in order to secure complete insulation between the combustion catalysts 2 and 3 and to fix them in a more reliable manner. This structure more securely prevents positional shift of the combustion catalyst 2 due to vibration during operation of the deodorizing catalyst, and provides more complete insulation between the combustion catalysts 2 and 3 and surrounding portions.

In addition, when the combustion catalyst 2 is incorporated in the tubular casing 10, a thermocouple and electrodes are attached to the combustion catalyst 2. The electrodes are attached as follows. A linear silver electrode is inserted into each of a center rod electrode insertion socket 15 and a outer rod electrode insertion socket 16 which are previously provided on the tubular casing 10. As shown in FiG. 3, the linear silver electrode 17 inserted into the center rod electrode insertion socket 15 is connected to the center rod 4 by means of hard soldering, while the linear silver electrode 18 inserted into the outer rod electrode insertion socket 16 is connected to the outer rode 5 by means of hard soldering.

The thermocouple 19 is provided on the combustion catalyst 2 as follows. As shown in FIGS. 3 and 4, through a thermocouple insertion socket 20 previously provided on the tubular casing 10, the thermocouple 19 is inserted such that the tip end of the thermocouple 19 is located inside the combustion catalyst 2. The thermocouple 19 performs temperature measurement at a position about 5 mm away from the secondary-side exit of the combustion catalyst 2 from which burned odorous gas is discharged. The reason why the tip end of the thermocouple 19 is disposed in the interior of the combustion catalyst 2 is that although performing measurement at the secondary-side exit is ideal, the tip end of the thermocouple 19 is disposed in the interior of the combustion catalyst 2 in order to prevent formation of a short circuit, which would otherwise be formed due to vibration-induced contact between the thermocouple 19 and the combustion catalyst 3 disposed on the secondary side of the combustion catalyst 2, to thereby secure stable temperature measurement.

At the time of attachment of the thermocouple and the electrodes, a heat resistant insulating tube 21 shown in FIG. 3 is used to provide insulation between the thermocouple and the corresponding insertion socket and surrounding portions, as well as between the electrodes and the corresponding insertion sockets and surrounding portions.

In the final state of assembly of the deodorizing apparatus 1, the combustion catalyst 3 is incorporated in the housing 10 to be located on the secondary side of the combustion catalyst 2. Since the combustion catalyst 3 is not heated through application of electricity, insulation between the combustion catalyst 3 and the surrounding portions is not required. Accordingly, the combustion catalyst 3 may be disposed such that it comes into direct contact with the tubular casing 10, and a thermal expansion mat may be interposed between the tubular casing 10 and the unheated combustion catalyst 3 in order to prevent vibration during operation of the deodorizing apparatus.

Further, the combustion catalyst 3 may be provided only in a single stage or in each of two or more stages, as shown in FIG. 4. The number of stages may be adjusted in accordance with the types of organic substances such as filth, poultry manure, and kitchen refuse.

After the deodorizing apparatus 1 is assembled in the above-described manner, the linear silver electrode 17 inserted into the center rod electrode insertion socket 15 and the linear silver electrode 18 inserted into the outer rod electrode insertion socket 16 shown in FIG. 3 are connected to an unillustrated current controller. The optimum supply current is determined based on temperature measurement data obtained through use of the thermocouple. That is, there can be employed a method in which supply current corresponding to each measured temperature is previous programmed and stored and the controller is caused to supply optimum current, or a method in which a relational expression describing the relationship between measured temperatures and corresponding supply currents is programmed and stored and the controller is caused to calculate and supply optimum current. Thus, the internal temperature of the combustion catalyst 2 is maintained at a target temperature within the range of 100°C - 700°C. An AC power source or a DC power source may be used.

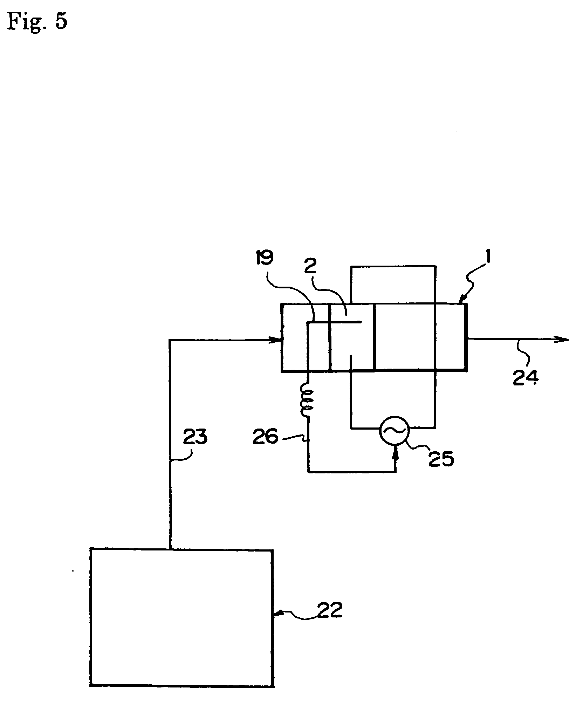

Through use of the deodorizing apparatus 1 manufactured in the above-described process, a process of deodorizing odorous gas is performed in a manner as shown in a schematic flowchart show in FIG. 5. The flowchart is depicted through use of an storage tank 22, the deodorizing apparatus 1, an odorous gas flow-in passage 23, and a clean-air discharge passage 24. That is, odorous gas generated from the storage tank 22 is fed to the deodorizing apparatus 1 via the odorous gas flow-in passage 23. The thus-fed odorous gas is burned and deodorized by action of the combustion catalyst 2, and is discharged from the clean-air discharge passage 24. The power source 25 and the supply current control system 26 are connected to the combustion catalyst 2.

At that time, in order to prevent backfiring in the combustion process, the amount of odorous gas that is fed from the storage tank 22 by means of an unillustrated blower is adjusted such that the odorous gas passes through the electrically heatable combustion catalyst at a linear velocity of 0.5 m/sec.

### EFFECT OF THE INVENTION

Since the deodorizing apparatus utilizes an electrically heatable combustion catalyst formed of catalyst foil having a insulating layer, rapid heating of odorous gas to a catalyst activation temperature to thereby prevent incomplete combustion of the odorous gas, and reduction in the size of the deodorizing apparatus. Further, since the deodorizing apparatus utilizes a metallic honeycomb catalyst, there can be avoided breakage of the honeycomb catalyst during handling, which would otherwise occur in the case of a ceramic honeycomb catalyst, and there can be reduced pressure loss of odorous gas produced within the combustion catalyst. Further, there has been established a method for preventing backfiring of gas in the deodorizing apparatus comprising the electrically heatable combustion catalyst to thereby perform deodorizing combustion with increased safety.

### BRIEF DESCRIPTION OF THE DRAWINGS

FIG. 1 is a schematic perspective view of a deodorizing apparatus.
FIG. 2 is an enlarged schematic sectional view showing a layered structure of the catalyst foil which carries catalyst on one side only.
FIG. 3 is a schematic view of the deodorizing apparatus as viewed from the direction of arrow A in FIG. 1.
FIG. 4 is a sectional view of the deodorizing apparatus.
FIG. 5 is a flowchart showing deodorization of odorous gas.

### DESCRIPTION OF SYMBOLS

- 1: deodorizing apparatus
- 2: electrically heatable combustion catalyst
- 3: unheated combustion catalyst
- 4: center rod
- 5: outer rod
- 6: heat resistant alloy foil
- 7: alumina whisker
- 8: insulating layer of crystallized glass
- 9: catalytic layer (precious metal catalyst + washcoat)
- 10: tubular casing
- 11: insulating coat material
- 12: intermediate layer
- 13: stopper
- 14: insulating bar
- 15: center rod electrode insertion socket
- 16: center rod electrode insertion socket
- 17, 18: linear silver electrodes
- 19: thermocouple
- 20: thermocouple insertion socket
- 21: heat resistant insulating tube formed of Teflon
- 22: storage tank
- 23: odorous gas flow-in passage
- 24: clean air discharge passage
- 25: power supply
- 26: supply current control system

## Claims

1. A deodorizing apparatus comprising a combustion catalyst formed of rolled catalyst foil having an insulating surface layer, and a tubular casing for accommodating the combustion catalyst, wherein the combustion catalyst uses, as a heating resistor, a catalyst foil that can be heated through application of electricity, and odorous gas is introduced from a primary side of the combustion catalyst and is discharged as clean air from a secondary side of the combustion catalyst after odorous components of the odorous gas undergo combustion.

2. A deodorizing apparatus according to Claim 1, wherein the combustion catalyst comprises a first electrically heatable combustion catalyst and a second electrically heatable combustion catalyst disposed on the secondary side of the first electrically heatable combustion catalyst.

3. A deodorizing apparatus according to Claim 1 or 2, wherein the insulating layer of the catalyst foil is crystallized glass provided between an alumina whisker layer and a catalyst layer composed of a precious metal component, which serves as a catalyst, and a washcoat.

4. A deodorizing apparatus according to any one of Claims 1-3, wherein a combustion catalyst is accommodated within the tubular casing whose inner surface is coated with an insulating coating material via an intermediate layer composed of mica and a thermal expansion mat.

5. A deodorizing apparatus according to any one of Claims 1 - 4, wherein the electrically heatable combustion catalyst has a thermocouple for measuring the internal temperature, and current supplied to the combustion catalyst is controlled based on the measured temperature in order to maintain a predetermined combustion temperature.

6. A deodorizing method using the deodorizing apparatus according to any one of Claims 1 - 5, wherein the amount of odorous gas introduced into the electrically heatable combustion catalyst is adjusted such that the odorous gas passes through the electrically heatable combustion catalyst at a linear velocity of 0.5 m/sec or greater.
